# EUROPEAN PATENT SPECIFICATION

(11) **EP 3 985 521 B1**
(45) Date of publication and mention of the grant of the patent: **10.01.2024**
(21) Application number: 20382900.7
(22) Date of filing: 13.10.2020
(51) Int. Cl.: G06F 12/0862

(54) **SYSTEM AND METHOD FOR PREFETCHING BURSTS ACCESSES TO CONTIGUOUS MEMORY LOCATIONS**
SYSTEM UND VERFAHREN ZUM PREFETCHING VON BURST-ZUGRIFFEN AUF BENACHBARTE SPEICHERPLÄTZE
SYSTÈME ET PROCÉDÉ DE PRÉLECTURE D'ACCÈS PAR RAFALES À DES EMPLACEMENTS DE MÉMOIRE CONTIGUS

(43) Date of publication of application: 20.04.2022
(73) Proprietor: Universidad de Murcia, 30071 Murcia (ES)
(72) Inventor: CEBRIÁN GONZÁLEZ, Juan Manuel, 30071 MURCIA (ES); ROS BARDISA, Alberto, 30071 MURCIA (ES); KAXIRAS, Stefanos, 30071 MURCIA (ES)
(74) Representative: ZBM Patents - Zea, Barlocci & Markvardsen

(56) References cited:
- EP-A1- 3 037 979
- WO-A1-2020/112320
- US-A- 5 761 706
- US-A1- 2007 283 105
- US-A1- 2007 283 106
- US-A1- 2017 010 971
- US-A1- 2019 347 103

## Description

This disclosure relates to methods of prefetching memory blocks in a processor system handling accesses to memory according to a relative order between accesses, and to a computer program and a system suitable to perform such methods of prefetching memory blocks.

### BACKGROUND

There exist computer architectures using load-store model for memory access which means that communication among processing elements (within computer architecture) is done through load and store operations to memory. On such architectures, data is moved from memory into registers before being operated on. Loads and stores may thus be generally seen as two types (or different ways) of memory accesses.

Store access latency has been traditionally hidden by implementing a store buffer, which allows stores to be retired from processor pipeline to the store buffer for as long as the store buffer is not full. However, when the buffer fills (e.g., due to a cache miss), the processor stalls. This scenario is common on store bursts, shifting the processor bottleneck to the store buffer. As it is well known by any skilled person, something similar may occur with bursts of loads in the context of e.g. out-of-order execution approaches also aimed at hiding latency.

Different prefetching strategies have been developed for the different cache levels across the memory hierarchy to reduce overall access latency. Cache prefetchers are usually applied over addresses that have been requested by previous memory accesses (e.g., stores, loads). This means that they help to reduce issue stalls caused by the filling of load or store buffers.

However, even with the currently existing prefetching strategies, the store buffer may be a critical component in memory-bound applications, reaching up to a third of the CPU stall cycles on database applications. Indeed, the store buffer size keeps growing to prevent stalls, but its maximum size is limited by CAM (content-addressable memory) access latency. US 2019/347103 A1 discloses a method for prefetching data, comprising mapping loop-unrolled instructions in iteration groups to shared stride-tracking record and prefetching data into cache memory of computer processor based on stride-tracking record.

An object of the disclosure is to provide new methods, systems and computer programs aimed at improving current ways of prefetching memory blocks in a processor system handling memory accesses.

### SUMMARY

In a first aspect, a method is provided of prefetching memory blocks in a processor system handling (or processing, performing, etc.) accesses to memory according to a relative order between accesses (or according to a sequence of accesses). The method comprises processing each of the accesses being handled in the relative order, said processing including performing an iteration process, each iteration of the iteration process including: capturing the access being currently handled by the processor system; identifying, from the captured access, a memory block to which the captured access refers; determining whether the memory block identified in current iteration is either coincident or contiguous or non-contiguous with respect to memory block identified in immediately previous iteration; and quitting the iteration process when a predefined number of iterations have been performed or non-contiguity has been determined.

The method further comprises verifying, once the iteration process has been quitted, whether one or more contiguities and zero non-contiguities have been determined in the performed iterations and, in said case, instructing a cache controller to prefetch a number of next contiguous memory blocks with respect to (or starting from) the memory block identified in last iteration of the iteration process. The term "next" is used in the expression "next contiguous memory blocks" to indicate next, subsequent, following, successive blocks in either forward or backward direction.

Such a proposed "prefetching" method is based on a prefetching approach, tailored to store instructions, that effectively removes buffer-induced stalls. This prefetching approach may be seen as based on three insights: (i) only a few store instructions are responsible for the majority of buffer-induced stalls; (ii) store pattern of the store instructions blocking the store buffer is predictable as they frequently correspond to sequential (or contiguous) memory block stores (often as a consequence of data movement code); and (iii) a certainly aggressive prefetch degree (i.e., prefetching of large amounts of consecutive memory blocks) may be beneficial to hide store latency. Standard prefetchers seem to be unable to transform majority of store misses into hits, but, at best, into a limited number of late prefetches (late in the sense that earlier prefetches would have hidden the full latency). As it is well known by any skilled person, something similar may occur with bursts of loads in the context of e.g. out-of-order execution approaches also aimed at hiding latency. The prefetching method proposed herein thus defines an improved manner of prefetching memory blocks by causing more aggressive prefetches that remove buffer-induced stalls and, therefore, hide full latency.

Prefetching methods according to present disclosure are based on detecting contiguous access patterns in the (store) buffer and predicting that the pattern will continue for instructions that are not currently in the buffer (due to size limits). In order to capture complex patterns, such as shuffling and interleaving, the proposed method detects accesses to contiguous memory blocks within a certain time frame or number of accesses (within a window of last accesses implemented through iteration process). The reason is that access addresses may be indeed shuffled by the compiler (e.g., reordering after a loop unrolling), and even though memory blocks are fully accessed, addresses themselves may not follow a contiguous access pattern. This allows the suggested method to tolerate a certain degree of interleaving and shuffling, for as long as all accesses still map to same memory block.

At that point, the method predicts that this pattern will repeat for the whole or remaining part of the memory page and causes triggering of a prefetch burst in cache controller, that may request write permission (in case of stores) and/or read-only permission (in case of loads) for all or part of the remaining memory blocks within current page. This request may be for blocks that are after the current block and may extend all or part of the way until the end of the memory page (forward burst), or for blocks before the current block and may extend all or part of the way to the beginning of the memory page (backward bursts). This suggested prediction, differently from non-predictive techniques, allows memory parallelism to be exploited outside the code scope delimited by the load or store buffer.

In some examples, the predefined number of iterations may be greater than or equal to a result of dividing memory block size by access size. In same or similar sense, verifying whether one or more contiguities have been determined may include verifying whether a number of contiguities have been determined, said number of contiguities corresponding to the predefined number of iterations divided by a result of dividing memory block size by access size. This way, it may be fully or almost fully ensured that several blocks will be considered within the accesses window implemented by the iteration process and, therefore, false positives associated to just one block may be avoided. Triggering a prefetch burst caused by a false positive may significantly degrade processor performance, and the proposed method may effectively avoid or minimize this penalizing scenario. In other words, the method proposed herein improves performance of the processor by aggressively prefetching blocks that are expected to be accessed while avoiding useless prefetches that may degrade performance of the processor.

According to examples, each of the accesses to memory handled by the processor system may correspond to a store (updating access). The proposed method is especially useful for stores thanks to huge aggressiveness implemented to avoid late prefetches, but it may be equally or similarly useful for loads although their less criticality in the expressed sense.

The method still further comprises, in case the determined one or more contiguities follow a direction from beginning to end of a memory page, the number of next contiguous memory blocks to be prefetched corresponds to all the next contiguous memory blocks from the memory block identified in last iteration to the end of the memory page, or to beyond the end of the page, i.e. to a block within posterior page.

The method yet further comprises, in case the determined one or more contiguities follow a direction from end to beginning of memory page, the number of next contiguous memory blocks corresponds to all the next contiguous memory blocks from the memory block identified in last iteration to the beginning of the memory page, or to beyond the beginning of the page, i.e. to a block within anterior page.

In some examples, identifying the memory block to which the captured access refers may include obtaining, from the captured access, a memory address to which the captured access refers. Once obtained, said memory address may be used to identify the memory block to which the captured access refers without considering least significant bits of the memory address denoting a memory position within same memory block.

Determining whether the memory block identified in current iteration is either coincident or contiguous or non-contiguous with respect to memory block identified in immediately previous iteration may include calculating a difference between the memory address obtained in current iteration (without least significant bits) and memory address obtained in immediately previous iteration (without least significant bits). In particular, following rules may be applied: coincidence may be determined if the calculated difference is equal to zero, contiguity may be determined if the calculated difference is equal to 1 or -1, and non-contiguity may be determined if the calculated difference is greater than 1 or less than -1.

According to some examples, instructing the cache controller may include instructing a L1 cache controller in the processor system.

In a further aspect, a computer program is provided comprising program instructions for causing a computing system to perform any of such methods of prefetching memory blocks in a processor system. The computer program may be embodied on a storage medium and/or carried on a carrier signal.

This "prefetching" computer program is suitable for performing "prefetching" methods such as the ones described in other parts of the disclosure. Hence, aspects of said "prefetching" methods, such as e.g. functional, structural, advantageous considerations, may be similarly attributable to "prefetching" computer programs.

In a still further aspect, a system is provided for prefetching memory blocks in a processor system handling accesses to memory according to a relative order between accesses. The system comprises an iteration module and a prefetch module.

The iteration module is configured to processing each of the accesses being handled in the relative order, said processing including performing an iteration process with each iteration including: capturing the access being currently handled by the processor system; identifying, from the captured access, a memory block to which the captured access refers; determining whether the memory block identified in current iteration is either coincident or contiguous or non-contiguous with respect to memory block identified in immediately previous iteration; and quitting the iteration process when a predefined number of iterations have been performed or non-contiguity has been determined.

The prefetch module is configured to verify, once the iteration process has been quitted, whether one or more contiguities and zero non-contiguities have been determined in the performed iterations and, in said case, to instruct a cache controller to prefetch a number of next contiguous memory blocks with respect to the memory block identified in last iteration of the iteration process.

This "prefetching" system is suitable for performing "prefetching" methods such as the ones described in other parts of the disclosure. Hence, aspects of said "prefetching" methods, such as e.g. functional, structural, advantageous considerations, may be similarly attributable to "prefetching" systems.

### BRIEF DESCRIPTION OF THE DRAWINGS

Non-limiting examples of the present disclosure will be described in the following, with reference to the appended drawings, in which:
Figure 1 is a block diagram schematically illustrating systems for prefetching memory blocks according to examples.
Figure 2 is a flow chart schematically illustrating methods of prefetching memory blocks according to examples.
Figure 3 is a block diagram schematically illustrating systems for prefetching memory blocks according to further examples.

### DETAILED DESCRIPTION OF EXAMPLES

In these figures the same reference signs have been used to designate same or similar elements.

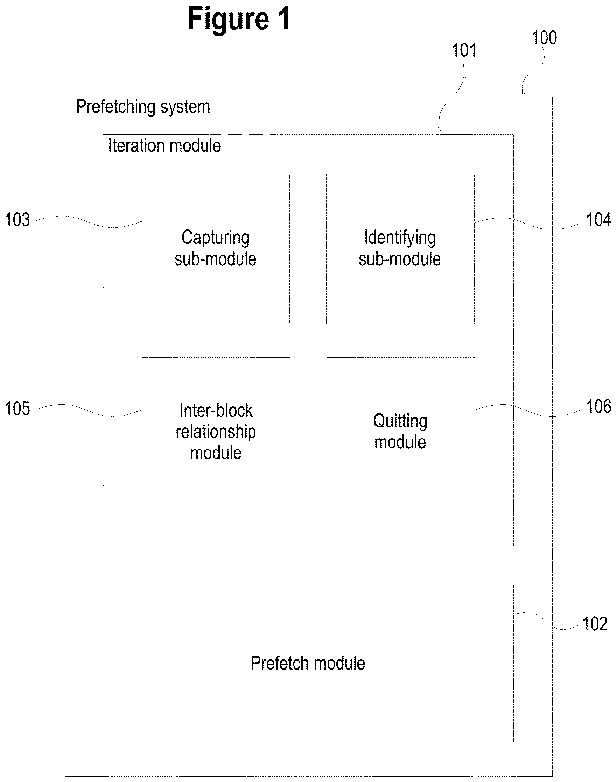

Figure 1 is a block diagram schematically illustrating systems for prefetching memory blocks according to examples. Such "prefetching" systems may be included in corresponding processor system handling accesses to (main) memory according to a relative order between accesses, such that prefetching of ones or other memory blocks may be caused by the prefetching system depending on an access pattern inferred from memory accesses handled by the processor system.

Prefetching systems 100 may comprise an iteration module 101 and a prefetch module 102. The iteration module 101 may be configured to process each of the accesses being handled by the processor system in the relative order, said processing including performing an iteration process. The iteration module 101 may comprise a capturing sub-module 103, an identifying sub-module 104, an inter-block relationship module 105, and a quitting sub-module 106. These sub-modules 103 - 106 may be configured to cooperate to perform the iteration process, which may include capturing (by e.g. sub-module 103) the access being currently handled by the processor system and identifying (by e.g. sub-module 104) a memory block to which the captured access refers. The iteration process may further include determining (by e.g. sub-module 105) whether the memory block identified in current iteration is either coincident or contiguous or non-contiguous with respect to memory block identified in immediately previous iteration. The iteration process may still further include quitting (by e.g. sub-module 106) the iteration process when a predefined number of iterations have been performed or non-contiguity has been determined.

The prefetch sub-module 102 may be configured to verify, once the iteration process has been quitted, whether zero non-contiguities and more than zero contiguities have been determined in the performed iterations. The prefetch sub-module 102 may be further configured to instruct a cache controller (e.g. L1 controller) to cause prefetching of a number of next contiguous memory blocks with respect to the memory block identified in last iteration of the iteration process

In some examples, prefetching methods may be restricted to only stores, i.e. store (or update) accesses are processed by the prefetching method.

In functionality of detecting when a predefined number of iterations have been performed, the predefined number of iterations may be a number greater than or equal to a result of dividing memory block size by access size. In functionality of verifying whether a number of contiguities have been determined, the number of contiguities may correspond to the predefined number of iterations divided by a result of dividing memory block size by access size.

In functionality of instructing a cache controller (e.g. L1 controller) to prefetch a number of next contiguous memory blocks with respect to the memory block identified in last iteration of the iteration process, the next contiguous memory blocks to be prefetched may be determined depending on whether the determined contiguities follow a direction from beginning to end or, otherwise, from end to beginning of same memory page. In case of beginning-to-end direction, the next contiguous memory blocks may correspond to all the next contiguous memory blocks from the memory block identified in last iteration (of the iteration process) to the end of the memory page. In case of end-to-beginning direction, the next contiguous memory blocks may correspond to all the next contiguous memory blocks from the memory block identified in last iteration (of the iteration process) to the beginning of the memory page.

Functionality of identifying the memory block to which the captured access refers may be implemented by obtaining a memory address to which the captured access refers, and identifying the memory block by taking into account most significant bits of the memory address uniquely identifying the memory block to which the memory address belongs. In other words, least significant bits of the memory address denoting a memory position within same memory block may be ignored. Such most significant bits of the memory address may thus correspond to block address to be identified.

In functionality of determining whether the memory block identified in current iteration is either coincident or contiguous or non-contiguous with respect to memory block identified in immediately previous iteration, a difference may be calculated between the block address obtained in current iteration and block address obtained in immediately previous iteration. If the calculated difference is equal to zero, it may be concluded that the memory block identified in current iteration and the memory block identified in immediately previous iteration correspond to same memory block. If the calculated difference is equal to 1, it may be concluded that the memory block identified in current iteration is contiguous to the memory block identified in immediately previous iteration in beginning-to-end direction within memory page. If the calculated difference is equal to -1, it may be concluded that the memory block identified in current iteration is contiguous to the memory block identified in immediately previous iteration in end-to-beginning direction within memory page. If the calculated difference is greater than 1 or less than -1, it may be concluded that the memory block identified in current iteration and the memory block identified in immediately previous iteration are not contiguous (or are non-contiguous) to each other.

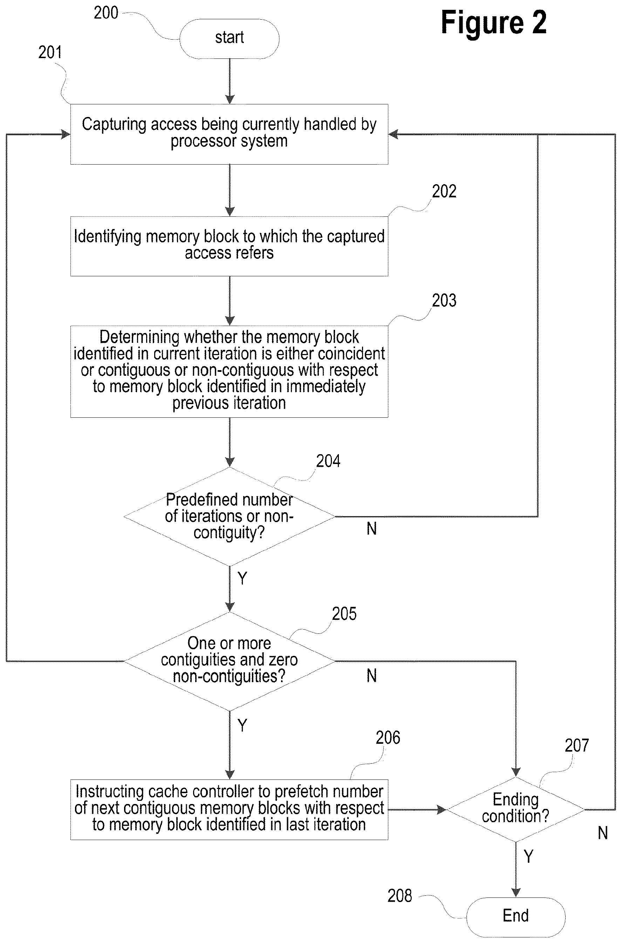

Figure 2 is a flow chart schematically illustrating methods of prefetching memory blocks in a processor system handling accesses to memory according to a relative order between accesses, according to examples. As generally shown in the figure, such "prefetching" methods may be initiated (e.g. at block 200) upon detection of a starting condition such as e.g. a request for starting the method or an invocation of the method from a controller in the processor system. Since prefetching methods according to Figure 2 are performable by systems according to previous Figure, number references from Figure 1 may be reused in following description of Figure 2.

Prefetching methods may further include (e.g. at blocks 201 - 204) processing each of the accesses being handled by the processor system in relative order, said processing including performing an iteration process. This functionality implementable at e.g. blocks 201 - 204 may be performed by e.g. iteration module 101 previously described with reference to Figure 1. Functional details and considerations explained about said module 101 may thus be similarly attributed to method blocks 201 - 204.

As a part of the iteration process, prefetching methods may include (e.g. at block 201) capturing the access being currently handled by the processor system. This functionality implementable at e.g. block 201 may be performed by e.g. capturing sub-module such as sub-module 103 previously described with reference to Figure 1. Functional details and considerations explained about said sub-module 103 may thus be similarly attributed to method block 201.

As a part of the iteration process, prefetching methods may further include (e.g. at block 202) identifying a memory block to which the captured access refers. This functionality implementable at e.g. block 202 may be performed by e.g. identifying sub-module such as sub-module 104 previously described with reference to Figure 1. Functional details and considerations explained about said sub-module 104 may thus be similarly attributed to method block 202.

As a part of the iteration process, prefetching methods may still further include (e.g. at block 203) determining whether the memory block identified in current iteration is either coincident or contiguous or non-contiguous with respect to memory block identified in immediately previous iteration. This functionality implementable at e.g. block 203 may be performed by e.g. inter-block relationship sub-module such as sub-module 105 previously described with reference to Figure 1. Functional details and considerations explained about said sub-module 105 may thus be similarly attributed to method block 203.

As a part of the iteration process, prefetching methods may yet further include (e.g. at decision block 204) verifying whether a predefined number of iterations have been performed or non-contiguity has been determined. In case of positive or true result (Yes) of said verification, the iteration process may be quitted. Otherwise (No), the method may loop back to block 201 for capturing next access being handled by the processor system to perform new iteration of the iteration process. This functionality implementable at e.g. block 204 may be performed by e.g. quitting sub-module such as sub-module 106 previously described with reference to Figure 1. Functional details and considerations explained about said sub-module 106 may thus be similarly attributed to method block 204.

Once the iteration process has been quitted, prefetching methods may furthermore include (e.g. at decision block 205) verifying whether one or more contiguities and zero non-contiguities have been determined in the performed iterations. In case of positive or true result (Yes) of said verification, the method may cause triggering of pertinent prefetch burst by transitioning to e.g. block 206. Otherwise (No), the method may cause verification of whether the method has to be terminated by transitioning to e.g. block 207.

Triggering of pertinent prefetch burst may be performed (at e.g. block 206) by instructing a cache controller to prefetch a number of next contiguous memory blocks with respect to the memory block identified in last iteration of the iteration process. Verification of whether the method has to be terminated may be performed (at e.g. block 207) by verifying whether an ending condition is satisfied, in which case the method may proceed to terminate its execution (at e.g. block 205) and, otherwise, the method may loop back to e.g. block 201 for capturing next access being handled by the processor system to perform new iteration of the iteration process. The ending condition may be detected by detecting e.g. a request for ending the method or an invocation of method termination from a controller in the processor system.

Above functionality or functionalities implementable at e.g. blocks 205 - 208 may be performed by e.g. prefetch module such as module 102 previously described with reference to Figure 1. Functional details and considerations explained about said module 102 may thus be similarly attributed to method blocks 205 - 208.

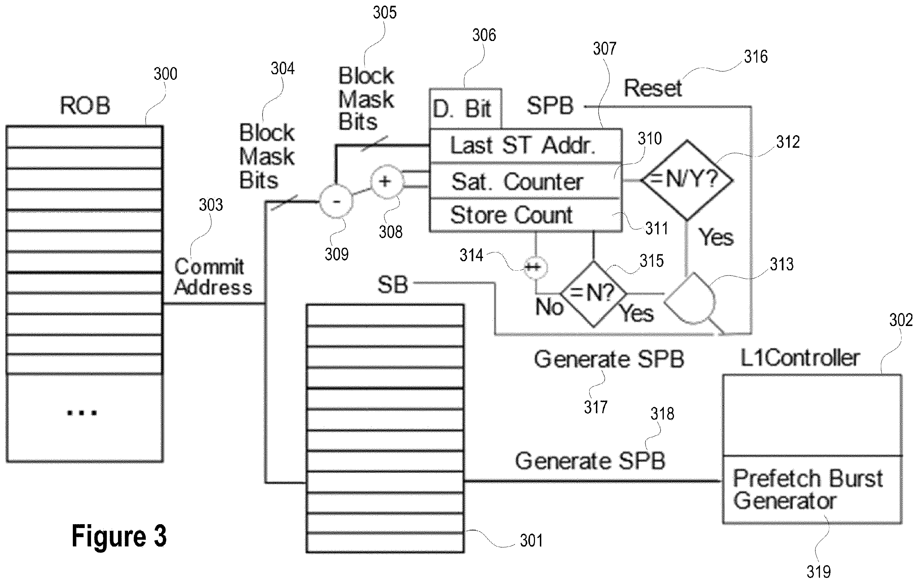

Figure 3 is a block diagram schematically illustrating systems for prefetching memory blocks according to further examples. Such systems may also be denominated as prefetching access burst systems or, in the particular case that accesses processed by said systems are stores, store prefetch burst (SPB) systems. Following description of Figure 3 will generally refer to SPB, but any skilled person will appreciate that proposed systems may function with any type of accesses to memory.

Implementation of SPB systems may require minimal hardware modifications and resources in pre-existing processor system. Figure 3 shows several elements of pre-existing processor system, such as e.g. reorder buffer ROB 300, store buffer SB 301, L1 cache controller 302, etc. Other elements in pre-existing processor system are not shown in the figure because they are not necessary to understand SPB systems according to present disclosure. For example, cache controllers other than L1 controller, CPU or main CPU, cache memory or memories, etc. are not shown in Figure 3.

As shown, SPB systems may include e.g. three registers and one extra bit to detect when to trigger prefetch burst. Register called Last Store Address 307 may store the address of the block being written by the last store that committed. Register called Saturated Counter 310 may keep record of how many consecutive or contiguous memory blocks have been accessed since last reset. Register called Store Count 311 may account the number of stores considered by SPB since last reset. Extra bit called Direction Bit 306 may specify whether SPB should prefetch all blocks from the current one to the end of the page (forward prefetch), or from the current block to the first one in the page (backward prefetch).

When a store commits, SPB may get the address of the block 304 to be written by the store. This block address 304 may be identified by e.g. omitting the least significant bits of the target memory address 303 reserved to indicate memory addresses within same block. Such least significant bits may be e.g. the six least significant bits of the target memory address for 64-byte blocks. Once block address 304 has been obtained, SPB may compute a difference 309 with respect to the block address of the last committed store 305 (stored in Last Store Address 307). If said difference is equal to 0, it means that both current and previous stores define access to same block, in which case register Saturated Counter 310 may not be modified. If the difference is equal to 1 (or to -1 for backward store bursts), current and previous stores define access to contiguous blocks to each other, in which case register Saturated Counter 310 may be incremented 308 and Direction Bit 306 may be set accordingly (denoting forward direction if difference = 1 or backward direction if difference = -1). In any other case, register Saturated Counter 310 may be reset 316. After each store computes the difference, register Last Store Address 307 may be updated with current block address and register Store Count 311 may be incremented 314.

Every N stores (or iterations of the iteration process) 315, wherein N may be a configurable parameter, SPB may check the register Saturated Counter 310. In case that register Saturated Counter 310 shows that N/Y blocks have been accessed 312, wherein Y may be the number of stores that fit in a block, it may be inferred that consecutive (or contiguous) blocks are being accessed, in which case corresponding store prefetch burst may be triggered 317, 318. For example, in a 64-byte block architecture, 8 consecutive 8-byte stores or 16 consecutive 4-byte stores fit each of the blocks. Therefore, Y may be equal to 8 in case that 8-byte stores tracking is targeted, Y may be equal to 16 in case that 4-byte stores tracking is targeted, and so on.

As shown in the figure, triggering of store prefetch burst may be indicated to store buffer SB 301 by output from AND-gate 313 depending on the N/Y-checking by hardware element 312 and the N-checking by hardware element 315, for causing the store buffer SB 301 to instruct Prefetch Burst Generator 319 (within e.g. L1 Controller 302) to trigger the store prefetch burst. The store buffer SB 301 may be further provided with prefetch direction (from Direction Bit 306). This way, in next store request (to be) sent to L1 cache controller 302, required prefetch burst may be signalled 318 to L1 Controller 302 for the Prefetch Burst Generator 319 to build corresponding prefetch requests.

It may be appreciated that each of the hardware elements included in prefetching system according to Figure 3 may be mapped (or may correspond) to modules and sub-modules of Figure 1. For example, address capturer 303 may correspond to capturing sub-module 103, and block bits masker 304 may correspond to identifying sub-module 104. Similarly, combination of subtractor 309, adder 308, Last Store Address 307, Saturated Counter 310, Store Count 311, and Direction Bit 306 may correspond to Inter-block relationship sub-module 105. Likewise, combination of adder 314 and checker 315 may correspond to Quitting sub-module 105, and combination of checker 312, AND-gate 313, SPB signaller 317, 318 and Prefetch Burst Generator 319 may correspond to Prefetch module 102.

As used herein, the term "module" or "sub-module" may be understood to refer to software, firmware, hardware and/or various combinations thereof. It is noted that the (sub-)modules are exemplary. The (sub-)modules may be combined, integrated, separated, and/or duplicated to support various applications. Also, a function described herein as being performed by a particular module may be performed by one or more other modules and/or by one or more other devices instead of or in addition to the function performed by the described particular module.

The (sub-)modules may be implemented across multiple devices, associated or linked to corresponding methods of prefetching memory blocks proposed herein, and/or to other components that may be local or remote to one another. Additionally, the (sub-)modules may be moved from one device and added to another device, and/or may be included in both devices, associated to corresponding methods of prefetching memory blocks proposed herein. Any software implementations may be tangibly embodied in one or more storage media, such as e.g. a memory device, a floppy disk, a compact disk (CD), a digital versatile disk (DVD), or other devices that may store computer code.

The methods of prefetching memory blocks according to present disclosure may be implemented by computing means, electronic means or a combination thereof. The computing means may be a set of instructions (e.g. a computer program) and then the methods of prefetching memory blocks may comprise a memory and a processor, embodying said set of instructions stored in the memory and executable by the processor. These instructions may comprise functionality or functionalities to execute corresponding methods of prefetching memory blocks such as e.g. the ones described with reference to other figures.

In case the methods of prefetching memory blocks are implemented only by electronic means, a controller of the system may be, for example, a CPLD (Complex Programmable Logic Device), an FPGA (Field Programmable Gate Array) or an ASIC (Application-Specific Integrated Circuit).

In case the methods of prefetching memory blocks are a combination of electronic and computing means, the computing means may be a set of instructions (e.g. a computer program) and the electronic means may be any electronic circuit capable of implementing corresponding method-steps of the methods of prefetching memory blocks proposed herein, such as the ones described with reference to other figures.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing the methods of prefetching memory blocks according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, the methods of prefetching memory blocks proposed herein.

All possible combinations of the described examples are also covered. Thus, the scope of the present disclosure should not be limited by particular examples, but should be determined only by a fair reading of the claims that follow.

## Claims

1. A method of prefetching memory blocks in a processor system handling accesses to memory according to a relative order between accesses, the method comprising:
processing each of the accesses being handled in the relative order, said processing including performing an iteration process with each iteration including:
capturing (201) the access being currently handled by the processor system,
identifying (202), from the captured access, a memory block to which the captured access refers,
determining (203) whether the memory block identified in current iteration is either coincident or contiguous or non-contiguous with respect to memory block identified in immediately previous iteration, and
quitting (204, Y) the iteration process when a predefined number of iterations have been performed or non-contiguity has been determined; and
verifying, once the iteration process has been quitted, whether one or more contiguities and zero non-contiguities have been determined in the performed iterations and, in said case (205, Y), instructing (206) a cache controller to prefetch a number of next contiguous memory blocks with respect to the memory block identified in last iteration of the iteration process; the method being **characterized in that**
the number of next contiguous memory blocks corresponds to all the next contiguous memory blocks from the memory block identified in last iteration to either
the end or beyond the end of memory page, whenever the determined one or more contiguities follow a direction from beginning to end of the memory page, or
the beginning or beyond the beginning of memory page, whenever the determined one or more contiguities follow a direction from end to beginning of the memory page.

2. A method according to claim 1, wherein the predefined number of iterations is greater than or equal to a result of dividing memory block size by access size.

3. A method according to any of claims 1 or 2, wherein verifying whether one or more contiguities have been determined includes: verifying whether a number of contiguities have been determined, said number of contiguities corresponding to the predefined number of iterations divided by a result of dividing memory block size by access size.

4. A method according to any of claims 1 to 3, wherein each of the accesses to memory handled by the processor system corresponds to a store.

5. A method according to any of claims 1 to 4, wherein identifying the memory block to which the captured access refers includes: obtaining, from the captured access, a memory address to which the captured access refers, and identifying the memory block to which the captured access refers without taking into account least significant bits of the memory address denoting a memory position within same memory block.

6. A method according to claim 5, wherein determining whether the memory block identified in current iteration is either coincident or contiguous or non-contiguous with respect to memory block identified in immediately previous iteration includes: calculating a difference between the memory address obtained in current iteration without least significant bits and memory address obtained in immediately previous iteration without least significant bits.

7. A method according to claim 6, wherein determining whether the memory block identified in current iteration is coincident with respect to memory block identified in immediately previous iteration includes: determining whether the calculated difference is equal to zero.

8. A method according to any of claims 6 or 7, wherein determining whether the memory block identified in current iteration is contiguous with respect to memory block identified in immediately previous iteration includes: determining whether the calculated difference is equal to 1 or-1.

9. A method according to any of claims 6 to 8, wherein determining whether the memory block identified in current iteration is non-contiguous with respect to memory block identified in immediately previous iteration includes: determining whether the calculated difference is greater than 1 or less than -1.

10. A method according to any of claims 1 to 9, wherein instructing the cache controller includes instructing a L1 cache controller (302) in the processor system.

11. A computer program comprising computer program code means adapted to perform all the steps of the method of any of claims 1 - 10 when said program is run on a computer.

12. A computer program as claimed in claim 11, embodied on a computer readable medium.

13. A system (100) for prefetching memory blocks in a processor system handling accesses to memory according to a relative order between accesses, the system comprising:
an iteration module (101) configured to processing each of the accesses being handled in the relative order, said processing including performing an iteration process with each iteration including:
capturing (103) the access being currently handled by the processor system,
identifying (104), from the captured access, a memory block to which the captured access refers,
determining (105) whether the memory block identified in current iteration is either coincident or contiguous or non-contiguous with respect to memory block identified in immediately previous iteration, and
quitting (106) the iteration process when a predefined number of iterations have been performed or non-contiguity has been determined; and
a prefetch module (102) configured to verify, once the iteration process has been quitted, whether one or more contiguities and zero non-contiguities have been determined in the performed iterations and, in said case, to instruct a cache controller to prefetch a number of next contiguous memory blocks with respect to the memory block identified in last iteration of the iteration process; the system being **characterized in that**
the number of next contiguous memory blocks corresponds to all the next contiguous memory blocks from the memory block identified in last iteration to either
the end or beyond the end of memory page, whenever the determined one or more contiguities follow a direction from beginning to end of the memory page, or
the beginning or beyond the beginning of memory page, whenever the determined one or more contiguities follow a direction from end to beginning of the memory page.

## Patentansprüche

1. Ein Verfahren zum Vorabrufen von Speicherblöcken in einem Prozessorsystem, das Zugriffe auf einen Speicher gemäß einer relativen Reihenfolge zwischen Zugriffen behandelt, wobei das Verfahren Folgendes umfasst:
verarbeiten jedes der Zugriffe, die in der relativen Reihenfolge behandelt werden, wobei das Verarbeiten das Durchführen eines Iterationsprozesses mit jeder Iteration beinhaltet, einschließlich:
erfassen (201) des Zugriffs, der derzeit von dem Prozessorsystem behandelt wird,
identifizieren (202), von dem erfassten Zugriff, eines Speicherblocks, auf den sich der erfasste Zugriff bezieht,
bestimmen (203), ob der in der aktuellen Iteration identifizierte Speicherblock in Bezug auf den in der unmittelbar vorhergehenden Iteration identifizierten Speicherblock entweder übereinstimmend oder zusammenhängend oder nicht zusammenhängend ist, und
beenden (204, Y) des Iterationsprozesses, wenn eine vordefinierte Anzahl von Iterationen durchgeführt worden ist oder Nicht-Kontiguität bestimmt worden ist; und
nach dem Beenden des Iterationsprozesses, überprüfen, ob in den durchgeführten Iterationen eine oder mehrere Kontiguitäten und keine Nicht-Kontiguitäten bestimmt worden sind, und in diesem Fall (205, Y) das Anweisen (206) einen Cache-Controller, eine Anzahl von nächsten zusammenhängenden Speicherblöcken in Bezug auf den in der letzten Iteration des Iterationsprozesses identifizierten Speicherblock vorab zu rufen; wobei das Verfahren **dadurch gekennzeichnet ist, dass**
die Anzahl der nächsten zusammenhängenden Speicherblöcke allen nächsten zusammenhängenden Speicherblöcken von dem in der letzten Iteration identifizierten Speicherblock entspricht bis entweder
das Ende oder über das Ende der Speicherseite hinaus, wann immer die bestimmte(n) eine(n) Kontiguität(en) einer Richtung vom Anfang bis zum Ende der Speicherseite folgen, oder
den Anfang oder über den Anfang der Speicherseite hinaus, wann immer die bestimmte(n) eine(n) Kontiguität(en) einer Richtung vom Ende zum Anfang der Speicherseite folgen.

2. Ein Verfahren nach Anspruch 1, wobei die vordefinierte Anzahl von Iterationen größer als oder gleich ein Ergebnis des Teilens der Speicherblockgröße durch die Zugriffsgröße ist.

3. Ein Verfahren nach einem der Ansprüche 1 oder 2, wobei das Verifizieren, ob eine oder mehrere Kontiguitäten bestimmt worden sind, Folgendes beinhaltet: Verifizieren, ob eine Anzahl von Kontiguitäten bestimmt worden ist, wobei die Anzahl von Kontiguitäten der vordefinierten Anzahl von Iterationen geteilt durch ein Ergebnis des Teilens der Speicherblockgröße durch die Zugriffsgröße entspricht.

4. Ein Verfahren nach einem der Ansprüche 1 bis 3, wobei jeder der Zugriffe auf den Speicher, der durch das Prozessorsystem behandelt wird, einem Speicherort entspricht.

5. Ein Verfahren nach einem der Ansprüche 1 bis 4, wobei das Identifizieren des Speicherblocks, auf den sich der erfasste Zugriff bezieht, Folgendes beinhaltet: Erhalten einer Speicheradresse, auf die sich der erfasste Zugriff bezieht, von dem erfassten Zugriff, und Identifizieren des Speicherblocks, auf den sich der erfasste Zugriff bezieht, ohne Berücksichtigung von Bits mit der geringsten Signifikanz der Speicheradresse, die eine Speicherposition innerhalb desselben Speicherblocks angibt.

6. Ein Verfahren nach Anspruch 5, wobei das Bestimmen, ob der in der aktuellen Iteration identifizierte Speicherblock entweder übereinstimmend oder zusammenhängend oder nicht zusammenhängend in Bezug auf den in der unmittelbar vorhergehenden Iteration identifizierten Speicherblock ist, Folgendes beinhaltet: Berechnen einer Differenz zwischen der Speicheradresse, die in der aktuellen Iteration ohne Bits mit der geringsten Signifikanz erhalten worden ist und der Speicheradresse, die in der unmittelbar vorhergehenden Iteration ohne Bits mit der geringsten Signifikanz erhalten worden ist.

7. Ein Verfahren nach Anspruch 6, wobei das Bestimmen, ob der in der aktuellen Iteration identifizierte Speicherblock in Bezug auf den in der unmittelbar vorhergehenden Iteration identifizierten Speicherblock übereinstimmt, Folgendes beinhaltet: Bestimmen, ob die berechnete Differenz gleich Null ist.

8. Ein Verfahren nach einem der Ansprüche 6 oder 7, wobei das Bestimmen, ob der in der aktuellen Iteration identifizierte Speicherblock in Bezug auf den in der unmittelbar vorhergehenden Iteration identifizierten Speicherblock zusammenhängend ist, Folgendes beinhaltet: Bestimmen, ob die berechnete Differenz gleich 1 oder -1 ist.

9. Ein Verfahren nach einem der Ansprüche 6 bis 8, wobei das Bestimmen, ob der in der aktuellen Iteration identifizierte Speicherblock in Bezug auf den in der unmittelbar vorhergehenden Iteration identifizierten Speicherblock nicht zusammenhängend ist, Folgendes beinhaltet: Bestimmen, ob die berechnete Differenz größer als 1 oder kleiner als -1 ist.

10. Ein Verfahren nach einem der Ansprüche 1 bis 9, wobei das Anweisen der Cache-Steuerung das Anweisen einer L1-Cache-Steuerung (302) in dem Prozessorsystem umfasst.

11. Ein Computerprogramm, das ein Computerprogrammcodemittel umfasst, das angepasst ist, um alle Schritte des Verfahrens von einem der Ansprüche 1 bis 10 durchzuführen, wenn das Programm auf einem Computer ausgeführt wird.

12. Ein Computerprogramm wie in Anspruch 11 beansprucht, das in einem computerlesbaren Medium enthalten ist.

13. Ein System (100) zum Vorabrufen von Speicherblöcken in einem Prozessorsystem, das Zugriffe auf Speicher gemäß einer relativen Reihenfolge zwischen Zugriffen behandelt, wobei das System Folgendes umfasst:
ein Iterationsmodul (101), das dazu konfiguriert ist, jeden der Zugriffe, die in der relativen Reihenfolge behandelt werden, zu verarbeiten, wobei das Verarbeiten das Durchführen eines Iterationsprozesses mit jeder Iteration beinhaltet, die Folgendes beinhaltet:
erfassen (103) des Zugriffs, der derzeit von dem Prozessorsystem abgewickelt wird,
identifizieren (104), von dem erfassten Zugriff, eines Speicherblocks, auf den sich der erfasste Zugriff bezieht,
bestimmen (105), ob der in der aktuellen Iteration identifizierte Speicherblock in Bezug auf den in der unmittelbar vorhergehenden Iteration identifizierten Speicherblock entweder übereinstimmend oder zusammenhängend oder nicht zusammenhängend ist, und
beenden (106, Y) des Iterationsprozesses, wenn eine vordefinierte Anzahl von Iterationen durchgeführt worden ist oder Nicht-Kontiguität bestimmt worden ist; und
ein Vorabrufmodul (102), das dazu konfiguriert ist, nach dem Beenden des Iterationsprozesses zu überprüfen, ob in den durchgeführten Iterationen eine oder mehrere Kontiguitäten und keine Nicht-Kontiguitäten bestimmt worden sind, und in diesem Fall einen Cache-Controller anzuweisen, eine Anzahl von nächsten zusammenhängenden Speicherblöcken in Bezug auf den in der letzten Iteration des Iterationsprozesses identifizierten Speicherblock vorab zu rufen; wobei das System **dadurch gekennzeichnet ist, dass**
die Anzahl der nächsten zusammenhängenden Speicherblöcke allen nächsten zusammenhängenden Speicherblöcken von dem in der letzten Iteration identifizierten Speicherblock entspricht bis entweder
das Ende oder über das Ende der Speicherseite hinaus, wann immer die bestimmte(n) eine(n) Kontiguität(en) einer Richtung vom Anfang bis zum Ende der Speicherseite folgen, oder
den Anfang oder über den Anfang der Speicherseite hinaus, wann immer die bestimmte(n) eine(n) Kontiguität(en) einer Richtung vom Ende zum Anfang der Speicherseite folgen.

## Revendications

1. Un procédé de prélecture de blocs de mémoire dans un système de processeur gérant des accès à une mémoire selon un ordre relatif entre les accès, le procédé comprenant :
traiter chacun des accès gérés dans l'ordre relatif, ledit traitement comprenant la réalisation d'un processus d'itération, à chaque itération comprenant :
la capture (201) de l'accès actuellement géré par le système de traitement,
identifier (202), à partir de l'accès capturé, un bloc de mémoire auquel l'accès capturé se réfère,
déterminer (203) si le bloc de mémoire identifié dans l'itération en cours est coïncident, ou contigu ou non contigu par rapport au bloc de mémoire identifié dans l'itération immédiatement précédente, et
quitter (204, Y) le processus d'itération lorsqu'un nombre prédéfini d'itérations a été effectué ou qu'une non-contiguïté a été déterminée ; et
vérifier, une fois le processus d'itération quitté, si une ou plusieurs contiguïtés et zéro non-contiguïtés ont été déterminées dans les itérations effectuées et, dans ledit cas (205, Y), donner à un contrôleur de cache l'instruction (206) de prélecture d'un certain nombre de blocs de mémoire contigus suivants par rapport au bloc de mémoire identifié dans la dernière itération du processus d'itération ; le procédé étant **caractérisé en ce que**
le nombre de blocs de mémoire contigus suivants correspond à tous les blocs de mémoire contigus suivants du bloc de mémoire identifié dans la dernière itération soit jusqu'
à la fin ou au-delà de la fin de la page de mémoire, chaque fois que la ou les contiguïtés déterminées suivent une direction du début à la fin de la page de mémoire, ou
au début ou au-delà du début de la page de mémoire, chaque fois que la ou les contiguïtés déterminées suivent une direction de la fin au début de la page de mémoire.

2. Un procédé selon la revendication 1, dans lequel le nombre prédéfini d'itérations est supérieur ou égal à un résultat de division de la taille du bloc de mémoire par la taille d'accès.

3. Un procédé selon l'une quelconque des revendications 1 ou 2, dans lequel vérifier si une ou plusieurs contiguïtés ont été déterminées comprend : vérifier si un nombre de contiguïtés ont été déterminées, ledit nombre de contiguïtés correspondant au nombre prédéfini d'itérations divisé par un résultat de la division de la taille du bloc de mémoire par la taille d'accès.

4. Un procédé selon l'une quelconque des revendications 1 à 3, dans lequel chacun des accès à la mémoire gérés par le système de processeur correspond à un entrepôt.

5. Un procédé selon l'une quelconque des revendications 1 à 4, dans lequel l'identification du bloc de mémoire auquel l'accès capturé se réfère comprend : l'obtention, à partir de l'accès capturé, d'une adresse de mémoire à laquelle l'accès capturé se réfère, et l'identification du bloc de mémoire auquel l'accès capturé se réfère sans prendre en compte les bits les moins significatifs de l'adresse de mémoire indiquant une position de mémoire dans le même bloc de mémoire.

6. Un procédé selon la revendication 5, dans lequel déterminer si le bloc de mémoire identifié dans l'itération actuelle est coïncident ou contigu ou non contigu par rapport au bloc de mémoire identifié dans l'itération immédiatement précédente comprend : calculer une différence entre l'adresse de mémoire obtenue dans l'itération actuelle sans bits les moins significatifs et l'adresse de mémoire obtenue dans l'itération immédiatement précédente sans bits moins significatifs.

7. Un procédé selon la revendication 6, dans lequel déterminer si le bloc de mémoire identifié dans l'itération en cours est coïncident avec le bloc de mémoire identifié dans l'itération immédiatement précédente comprend : déterminer si la différence calculée est égale à zéro.

8. Un procédé selon l'une quelconque des revendications 6 ou 7, dans lequel déterminer si le bloc de mémoire identifié dans l'itération en cours est contigu par rapport au bloc de mémoire identifié dans l'itération immédiatement précédente comprend : déterminer si la différence calculée est égale à 1 ou -1.

9. Un procédé selon l'une quelconque des revendications 6 à 8, dans lequel déterminer si le bloc de mémoire identifié dans l'itération en cours est non contigu par rapport au bloc de mémoire identifié dans l'itération immédiatement précédente comprend : déterminer si la différence calculée est supérieure à 1 ou inférieure à -1.

10. Un procédé selon l'une quelconque des revendications 1 à 9, dans lequel donner une instruction au contrôleur de cache comprend donner une instruction à un contrôleur de cache L1 (302) dans le système de processeur.

11. Un programme informatique comprenant un moyen formant du code de programme informatique adapté pour exécuter toutes les étapes du procédé selon l'une quelconque des revendications 1 à 10 lorsque ledit programme est exécuté sur un ordinateur.

12. Un programme informatique tel que revendiqué dans la revendication 11, incorporé sur un support lisible par ordinateur.

13. Un système (100) de prélecture de blocs de mémoire dans un système de processeur gérant des accès à la mémoire selon un ordre relatif entre les accès, le système comprenant :
un module d'itération (101) configuré pour traiter chacun des accès gérés dans l'ordre relatif, ledit traitement comprenant la réalisation d'un processus d'itération à chaque itération comprenant :
la capture (103) de l'accès actuellement géré par le système de traitement,
identifier (104), à partir de l'accès capturé, un bloc de mémoire auquel l'accès capturé se réfère,
déterminer (105) si le bloc de mémoire identifié dans l'itération en cours est coïncident, ou contigu ou non contigu par rapport au bloc de mémoire identifié dans l'itération immédiatement précédente, et
quitter (106, Y) le processus d'itération lorsqu'un nombre prédéfini d'itérations a été effectué ou qu'une non-contiguïté a été déterminée ; et
un module de prélecture (102) configuré pour vérifier, une fois le processus d'itération quitté, si une ou plusieurs contiguïtés et zéro non-contiguïtés ont été déterminées dans les itérations effectuées et, dans ce cas, pour donner l'instruction à un contrôleur de cache de prélecture d'un certain nombre de blocs de mémoire contigus suivants par rapport au bloc de mémoire identifié dans la dernière itération du processus d'itération ; le système étant **caractérisé en ce que**
le nombre de blocs de mémoire contigus suivants correspond à tous les blocs de mémoire contigus suivants du bloc de mémoire identifié dans la dernière itération soit jusqu'
à la fin ou au-delà de la fin de la page de mémoire, chaque fois que la ou les contiguïtés déterminées suivent une direction du début à la fin de la page de mémoire, ou
au début ou au-delà du début de la page de mémoire, chaque fois que la ou les contiguïtés déterminées suivent une direction de la fin au début de la page de mémoire.
